# FASCICULE DE BREVET EUROPEEN

(11) **EP 0 459 583 B1**
(45) Date de publication et mention de la délivrance du brevet: **21.12.1994**
(21) Numéro de dépôt: 91201273.9
(22) Date de dépôt: 29.05.1991
(51) Int. Cl.: G01S 7/52

(54) **Echographe ultrasonore à correction adaptative d'aberration de phase**
Ultraschallbildgerät mit adaptiver Phasenaberrationskorrektur
Ultrasonic echograph with phase aberration adaptive correction

(30) Priorité: 01.06.1990 FR 9006852; 18.01.1991 FR 9100558
(43) Date de publication de la demande: 04.12.1991
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Mallart, Raoul, Société Civile S.P.I.D., F-75008 Paris (FR)
(74) Mandataire: Landousy, Christian

(56) Documents cités:
- EP-A- 0 256 481
- EP-A- 0 320 303

## Description

La présente invention concerne un procédé d'examen de milieux par échographie ultrasonore comprenant une étape d'émission, à partir d'un réseau de m éléments transducteurs ultrasonores, de signaux ultrasonores vers le milieu à explorer et une étape de réception et traitement des signaux échographiques renvoyés par le milieu examiné vers lesdits éléments transducteurs, avec focalisation desdits signaux par application d'une loi de retards appropriée respectivement dans les n voies d'émission et dans les n voies de réception associées aux n éléments transducteurs constituant l'ouverture ultrasonore, cette étape de réception et traitement comprenant elle-même :
(a) une étape de corrélation, deux à deux, des n signaux disponibles après focalisation à la réception, en vue de la détermination de (n-1) valeurs de correction des retards de focalisation ;
(b) en fonction des (n-1) valeurs ainsi déterminées, une étape de correction des retards de focalisation lors du tir suivant ou du même tir.

L'invention concerne également, pour la mise en oeuvre de ce procédé, un appareil d'examen de milieux par échographie ultrasonore, comprenant un réseau de m éléments transducteurs ultrasonores associé à un étage d'émission de signaux ultrasonores vers le milieu à explorer, à un étage de réception et traitement des signaux échographiques renvoyés par le milieu exploré vers lesdits éléments transducteurs, lesdits étages d'émission et de réception et traitement comprenant respectivement des moyens de focalisation par application de retards appropriés dans les n voies d'émission et dans les n voies de réception associées aux n éléments transducteurs constituant l'ouverture ultrasonore, et à un étage de commande de balayage pour le déplacement de l'ouverture ultrasonore sur le réseau d'éléments transducteurs, l'étage de réception et traitement comprenant en outre :
(a) en parallèle sur les n voies de réception, des moyens de corrélation des n signaux focalisés associés à ces n voies et considérés deux à deux, en vue de la détermination de (n-1) valeurs de correction des retards de focalisation ;
(b) des moyens de correction, en fonction des (n-1) valeurs ainsi déterminées, des retards de focalisation, lors du tir suivant ou du même tir.

De tels procédé et appareil sont utilisables en particulier dans le domaine médical, ou bien pour le contrôle non destructif de toutes sortes de matériaux, sans que de telles applications soient, bien entendu, limitatives.

Un échographe est un appareil d'examen de milieux utilisant le rayonnement ultrasonore comme source d'information. Un tel appareil met en oeuvre, pour son fonctionnement, une étape d'émission, par tirs périodiques, de signaux ultrasonores vers le milieu exploré ainsi qu'une étape de réception et traitement des échos renvoyés par les obstacles rencontrés dans le milieu exploré. Les deux étapes sont réalisées avec la même sonde ultrasonore en contact avec le milieu. Cette sonde est une structure composée en général de tout un réseau de transducteurs ultrasonores.

Au cours de l'étape d'émission, on explore sélectivement le milieu selon une ligne. En réception, l'image de cette ligne explorée est formée en tenant compte du temps de vol dans le milieu et de l'amplitude des échos issus des différents obstacles rencontrés sur la ligne. L'image d'un plan de coupe est réalisée par un balayage de cette ligne. Pour obtenir une bonne résolution d'image, on cherche à explorer le milieu de façon très sélective par un tir ultrasonore focalisé, et, en réception, à sélectionner les échos issus de la même ligne en utilisant une ouverture focalisante.

Une technique de focalisation couramment employée consiste à utiliser un réseau linéaire de transducteurs et à définir à l'émission un faisceau incident focalisé à l'aide d'une loi de retards imposée aux impulsions d'excitation des transducteurs. En réception, la focalisation est alors réalisée de façon similaire, en retardant de façon appropriée les signaux reçus par chacun des transducteurs du réseau, avant leur sommation et les traitements ultérieurs. Ce traitement des signaux en réception, qui conduit à disposer d'un signal de grande amplitude pour les échos issus du point de focalisation (ce point est situé sur la ligne explorée) et de signaux faibles pour tous les autres échos, est, habituellement appelé formation de voie.

Pour obtenir une bonne focalisation sur toute une ligne, les échographes actuels utilisent une loi de focalisation en réception qui varie rapidement en fonction du temps pour être à chaque instant adaptée aux échos reçus. Cette possibilité est due à l'existence d'une relation univoque entre le temps et la profondeur en échographie, les échos renvoyés par les structures plus lointaines arrivant plus tard. En fait, par souci de simplification, la variation de focale de réception n'est en général pas continue, mais par zones. La détermination des lois de retards de focalisation se fait en appliquant diverses considérations géométriques, et notamment en supposant que la vitesse de propagation du son est constante dans le milieu exploré. Pour une focalisation efficace, les retards appliqués doivent en outre avoir une précision du huitième de longueur d'onde : par exemple, pour une sonde de fréquence centrale 5 MHz, les retards doivent pouvoir varier par pas de 25 ns ( = 200 ns/8).

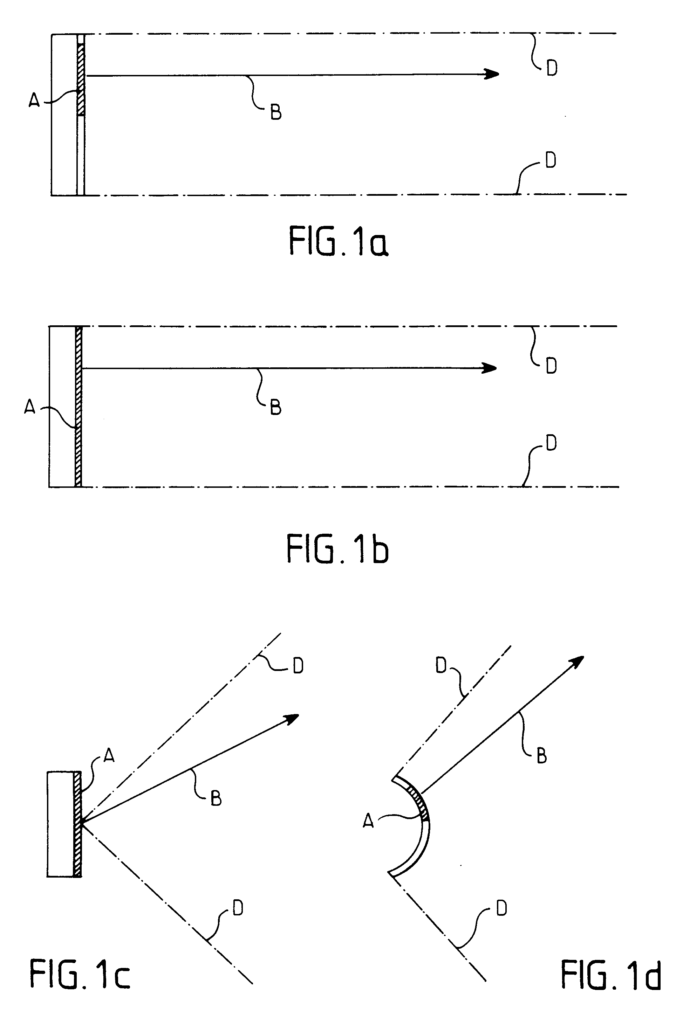

L'utilisation de réseaux linéaires d'éléments transducteurs apporte la possibilité non seulement de focaliser, mais aussi d'effectuer le balayage nécessaire à la formation de l'image bidimensionnelle. Ce balayage peut être effectué de trois façons différentes au moins, décrites en référence à la figure 1, qui montre différents types de sondes avec, à chaque fois, représentation des ouvertures acoustiques A utilisées, des axes B des faisceaux formés, et des limites D du champ exploré.

La première solution, la plus simple, consiste (voir la figure 1a) à utiliser un réseau d'une centaine (ou plus) de transducteurs (on en utilise couramment 128). On définit alors une ouverture d'émission/réception de taille donnée (16 à 64 éléments typiquement), qui focalise en émission et en réception selon un axe perpendiculaire au réseau. Le balayage est obtenu en déplaçant l'ouverture par multiplexage analogique. Deux ouvertures successives ainsi définies ont une intersection qui est toute l'ouverture sauf un ou quelques éléments transducteurs. Ce mode de fonctionnement permet d'obtenir des images d'une zone du milieu contenue dans l'ombre géométrique de la sonde.

Dans les deux autres techniques de balayage, tous les éléments de la sonde sont utilisés pour toutes les lignes de l'image. Ces sondes contiennent actuellement 64 ou 128 éléments. Dans l'un de ces deux modes (voir la figure 1b), les lois de focalisation sont calculées pour former des lignes perpendiculaires au réseau. Ici ausi, la zone du milieu explorée est contenue dans l'ombre de la sonde. L'intérêt de ce mode vient de l'utilisation de tous les éléments, c'est-à-dire de grandes ouvertures, qui permettent d'obtenir une meilleure résolution.

L'autre mode d'utilisation (voir la figure 1c) est surtout utilisé pour obtenir des images de zones plus grandes que l'empreinte de la sonde sur le milieu. Les lois de retards en émission et en réception sont calculées de telle sorte que le faisceau ultrasonore peut avoir un angle quelconque par rapport à l'axe de la sonde. L'image est obtenue en balayant un secteur angulaire (le plus souvent de -45 à +45 degrés). De tels systèmes, appelés en anglais "phased arrays", permettent notamment, dans le cas d'applications dans le domaine médical, de réaliser des images du coeur à travers la fenêtre acoustique constituée par un des intervalles entre les côtes.

D'autres types de sondes existent, qui utilisent par exemple des réseaux linéaires courbes (voir la figure 1d) pouvant émettre des faisceaux ultrasonores perpendiculairement à leur tangente et ainsi permettre aussi d'obtenir une image du milieu sur une zone plus grande que leur empreinte.

Le rôle d'un échographe étant de réaliser des images, un traitement des signaux obtenus après la formation de voie est alors nécessaire. Celui-ci tient en deux étapes principales : d'une part une détection d'enveloppe qui extrait l'information d'amplitude du signal formé, d'autre part une conversion de balayage qui, à partir de l'information temporelle contenue dans les enveloppes des signaux et de la position de chaque ligne relativement à la sonde, reconstruit l'image.

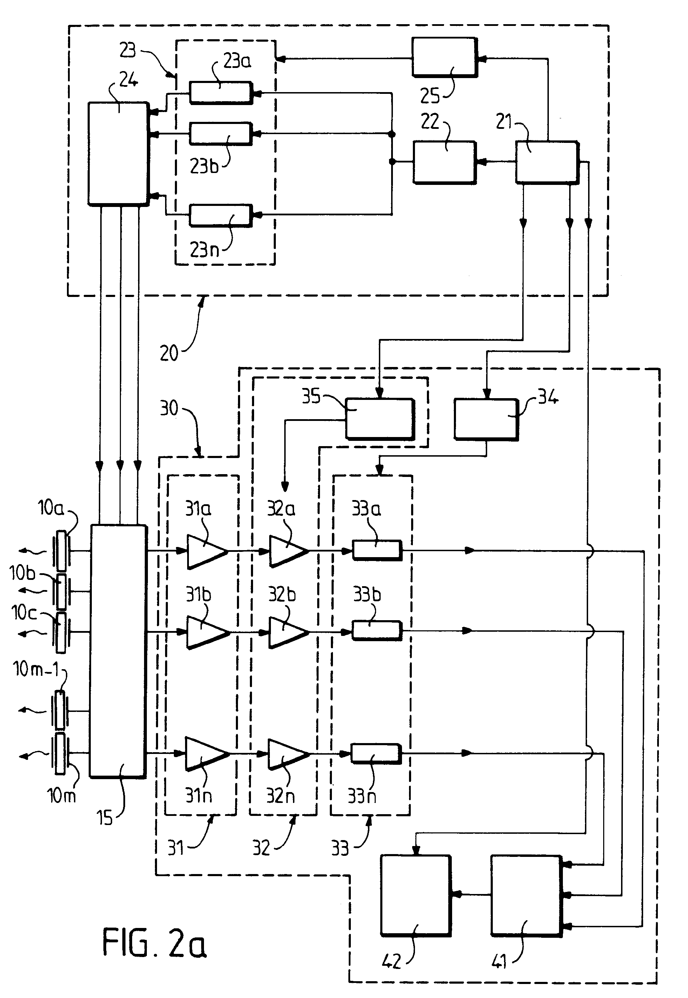

Ce rappel général du fonctionnement d'un échographe classique permet maintenant d'en définir la structure générale, proposée sur la figure 2a. L'échographe ainsi représenté comprend tout d'abord un réseau de m transducteurs ultrasonores 10a à 10m connectés à un aiguilleur analogique 15 qui permet de définir l'ouverture. L'autre extrémité de cet aiguilleur 15 est connectée d'une part à un étage d'émission 20 et d'autre part à un étage 30 de réception et traitement.

L'étage d'émission 20 comprend en général les éléments suivants :
(a) un circuit séquenceur 21 définissant la cadence des tirs ultrasonores, à une fréquence de récurrence de l'ordre de 3 à 5 kilohertz par exemple, et comprenant essentiellement un oscillateur et un diviseur de fréquence qui délivre les différents signaux d'horloge nécessaires ;
(b) en sortie du circuit séquenceur 21, un circuit 22 d'émission des signaux électriques d'excitation des transducteurs, cette excitation étant commandée soit selon une loi temporelle appropriée pour permettre une focalisation des signaux ultrasonores, soit au contraire en phase, les différents retards de focalisation étant alors obtenus (c'est le cas représenté sur la figure 2a) à l'aide de n lignes à retard 23a à 23n placées en sortie du circuit 22, respectivement dans les n voies d'émission associées aux n transducteurs utilisés pour l'émission (n inférieur à m) ;
(c) si la focalisation n'a pas été réalisée par le circuit 22 (comme indiqué en (b)), les n lignes à retard 23a à 23n, constituant un circuit de focalisation électronique 23 ;
(d) un circuit 24 d'activation de la haute tension, délivrant les impulsions haute tension pour l'exécution de l'émission par les transducteurs.

Le circuit séquenceur 21 délivre non seulement les impulsions de synchronisation des tirs ultrasonores, mais aussi les signaux de commande d'un circuit 25 de contrôle de focalisation à l'émission. Ce circuit 25 contient en mémoire la séquence des lois de retards à l'émission pour chaque transducteur, cette séquence étant destinée à assurer la configuration des lignes à retard 23a à 23n du circuit de focalisation 23 selon une loi prédéfinie pour chaque tir.

L'étage 30 de réception et traitement est composé tout d'abord de n voies de réception et traitement comprenant elles-mêmes, dans le cas présent, les éléments successifs suivants :
(a) des préamplificateurs 31a à 31n, l'ensemble des n préamplificateurs constituant un circuit de préamplification 31 qui reçoit les n signaux échographiques correspondant à l'ouverture du réseau de transducteurs ;
(b) un circuit de compensation de gain en fonction du temps 32 ;
(c) des lignes à retard 33a à 33n, l'ensemble de ces lignes à retard constituant un circuit 33 de focalisation à la réception (focalisation dynamique).

Le circuit de compensation de gain 32 comprend essentiellement n amplificateurs 32a à 32n à gain variable en fonction du temps, contrôlés par un circuit de commande 35 recevant lui-même des impulsions de synchronisation en provenance du circuit séquenceur 21. Le circuit 33 de focalisation à la réception est relié à une mémoire 34 contenant en mémoire, pour chaque voie, l'ensemble des lois de retard pour chaque zone de focalisation et pour chaque ligne de l'image, cette mémoire 34 étant elle-même, elle aussi, commandée par le circuit séquenceur 21.

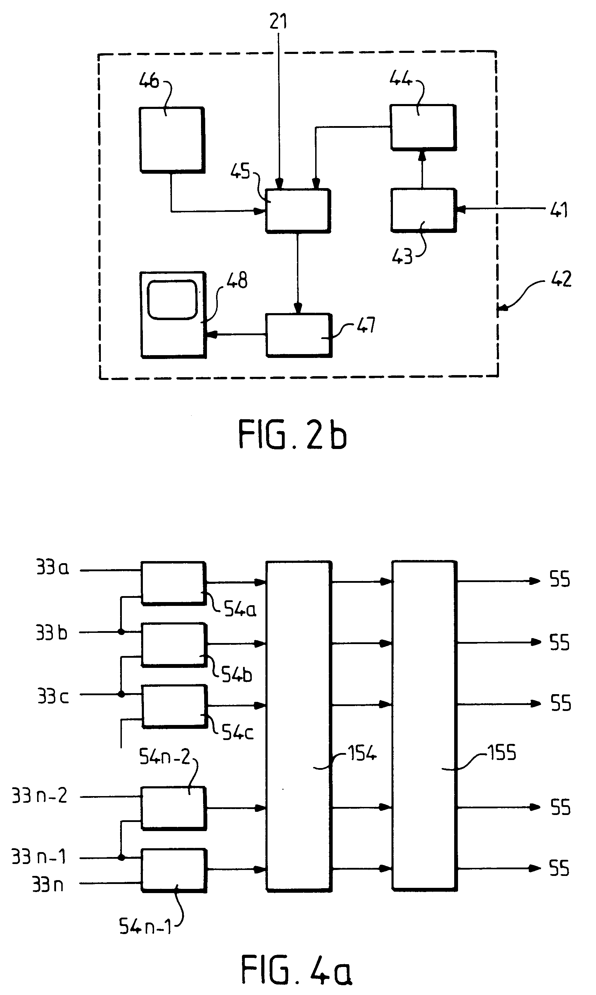

Un sommateur 41 reçoit alors les sorties des n voies de réception et traitement ainsi constituées (en fait, les sorties du circuit 33), et est suivi de circuits connus permettant l'obtention d'images de plans de coupe des milieux explorés. L'ensemble de ces circuits, regroupé sous le terme de sous-ensemble de traitement et de visualisation 42 et représenté sur la figure 2b, comprend essentiellement :
- un détecteur d'enveloppe 43 recevant la sortie du sommateur 41 et suivi d'un convertisseur analogique-numérique 44 ;
- un convertisseur de balayage 45 recevant d'une part la sortie du convertisseur analogique-numérique 44,d'autre part la sortie d'une mémoire 46 définissant les positions des lignes explorées par rapport à la sonde, et également des signaux de synchronisation fournis là encore par le circuit séquenceur 21 ;
- une mémoire d'image 47 servant de mémoire-tampon pour l'écriture des signaux de sortie du convertisseur de balayage 45, et dont les signaux de sortie sont eux-mêmes, après lecture de cette mémoire, affichés sur un écran de visualisation 48.

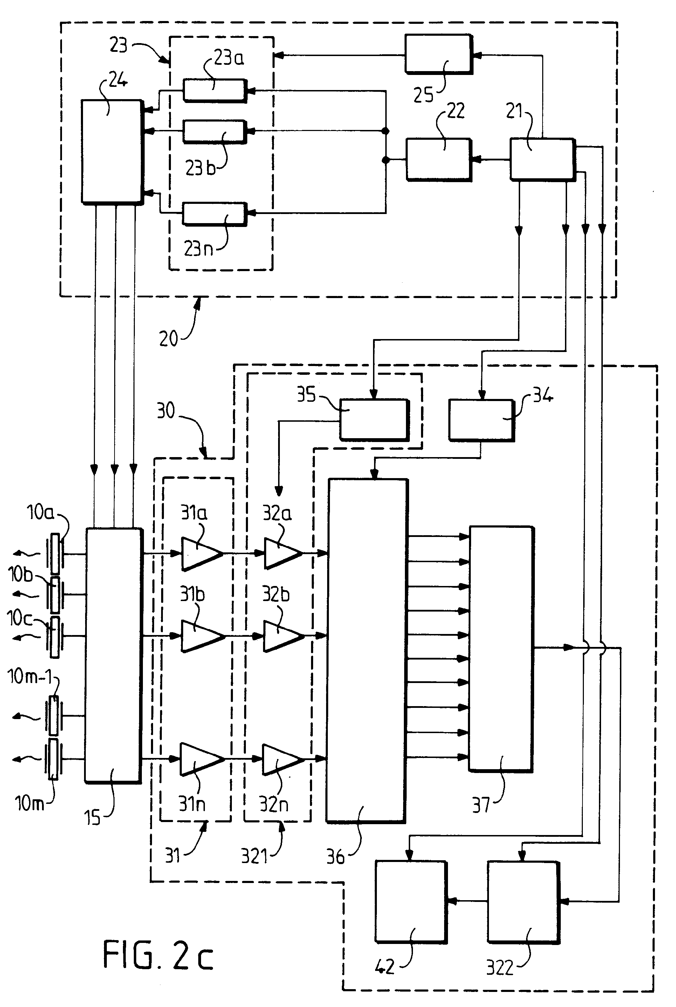

Bien entendu, ce rappel de la structure d'un échographe classique est très général, et diverses variantes méritent aussi d'être signalées, et notamment celle qui consiste à opérer le traitement des signaux en réception (ou formation de voies) de façon numérique en prévoyant par exemple un dispositif de conversion analogique-numérique en sortie du circuit 32 de compensation de gain en fonction du temps. Un perfectionnement rencontré dans certains échographes haut de gamme consiste aussi, comme le montre le mode de réalisation de la figure 2c, à répartir la compensation de gain en fonction du temps sur deux circuits de compensation de gain distincts 321 et 322, l'un situé comme précédemment en sortie du circuit 31 et en amont du circuit de focalisation à la réception, pour opérer une première compensation de gain permettant déjà de s'affranchir de la majeure partie du bruit, et l'autre situé en aval des circuits opérant la focalisation et la sommation, juste avant le sous-ensemble 42, pour réaliser une compensation complémentaire plus fine.

Lesdites fonctions de focalisation et de sommation peuvent d'ailleurs être réalisées différemment de ce qui a déjà été décrit, en proposant cette fois, pour leur mise en oeuvre, comme le montre aussi la figure 2c, un aiguilleur 36 et une ligne à retard 37 unique. Cet aiguilleur 36, commandé par le séquenceur 34 prévu comme précédemment en sortie du circuit 21, a autant d'entrées qu'il y a de transducteurs dans l'ouverture et autant de sorties que de retards possibles. Ces sorties sont connectées aux différents points d'entrée de la ligne à retard 37. L'aiguilleur 36 reçoit les signaux de sortie du circuit 321 de compensation de gain, les convertit en courant puis dirige chaque signal ainsi formé vers la sortie qui correspond au retard désiré. La sommation est réalisée par l'addition naturelle des courants entrant dans la ligne à retard 37.

Le principe de fonctionnement des échographes actuels repose en général sur l'hypothèse d'une vitesse ultrasonore constante dans les tissus explorés, notamment pour permettre le calcul des différents retards de focalisation et de l'angulation éventuelle des faisceaux et pour permettre la conversion en informations de profondeur des informations liées aux temps de vol des échos. Cependant, cette hypothèse est rarement vérifiée : la vitesse de propagation des ultrasons a par exemple pour valeur moyenne dans le foie 1540 m/s, tandis que, dans les tissus lipidiques, elle vaut approximativement 1300 m/s. Il en résulte, aussi bien en émission qu'en réception, surtout un effet de défocalisation des faisceaux ultrasonores, qui entraîne une perte de résolution et de contraste des images d'autant plus importante que l'on utilise de plus grandes ouvertures focalisantes et des sondes de fréquence plus élevée. L'influence de la fréquence sur la dégradation ainsi constatée peut être comprise en rappelant la nécessité de conserver une précision sur les retards d'un huitième de longueur d'onde environ, ce qui correspond à une précision d'autant meilleure que la fréquence est plus élevée, tandis que l'influence de la taille de l'ouverture peut être expliquée en constatant que, plus l'ouverture est grande, plus la probabilité de rencontrer des zones de vitesse du son différente est élevée.

Une solution pour réduire les interférences qui résultent d'une telle défocalisation consiste à comparer par corrélation les signaux échographiques reçus par les différents transducteurs et à retarder ultérieurement chacun de ces signaux, respectivement avant leur combinaison et l'exécution des opérations de détection d'enveloppe, filtrage et affichage. L'opération ainsi proposée consiste donc en une seule correction, dans la chaîne de réception, après le premier tir, des retards affectant chacun des signaux échographiques reçus. La demande de brevet européen EP 0 256 481 décrit un échographe ultrasonore équipé d'un dispositif de focalisation adaptative opérant selon un tel procédé. Ce document décrit également comment mettre en oeuvre ledit procédé.

Le but de l'invention est de proposer un procédé amélioré de correction des effets des inhomogénéités de la vitesse ultrasonore.

L'invention concerne à cet effet un procédé tel que défini dans le préambule de la description et caractérisé en ce que l'étape de réception et traitement comprend, préalablement à ladite correction des retards de focalisation à l'émission, une opération de déplacement de l'ouverture d'un nombre p d'éléments transducteurs égal à 1 ou faible devant le nombre n, et en ce que ladite correction à l'émission n'est appliquée qu'aux (n-p) éléments transducteurs communs à deux ouvertures successives.

Ce procédé présente l'avantage d'être très rapide et donc compatible avec un fonctionnement en temps réel de l'échographe ultrasonore.

Dans le cas où n = m, c'est-à-dire lorsque les m éléments transducteurs sont toujours tous utilisés, le déplacement de l'ouverture est obtenu non pas par modification de la sélection du nombre n déterminé d'éléments transducteurs, mais par modification de la loi de retards appliquée aux m transducteurs, et l'étape de correction concerne alors tous ces m transducteurs.

En utilisant ainsi les retards estimés lors du tir d'une ligne pour la correction de la ligne suivante, un seul tir est requis pour chacune des lignes de l'image, ce qui est avantageux en matière de cadence d'images. Il n'est ainsi pas nécessaire de faire des corrections itératives sur la même ligne, puisqu'elles sont réalisées automatiquement par la propagation des corrections d'une ligne à l'autre. On peut cependant remarquer qu'avec ce procédé la première ligne n'est pas corrigée, ce à quoi on peut remédier par exemple en effectuant par image un tir supplémentaire, uniquement pour assurer la correction de ladite ligne. Dans le cas d'un balayage linéaire où un élément transducteur par ouverture ne reçoit pas de correction, on peut, pour celui-ci, utiliser la correction apportée à l'élément transducteur voisin, car les fluctuations de vitesse ultrasonore sont à évolution lente pour des distances aussi faibles.

Lorsqu'on veut obtenir une résolution maximale sur toute la profondeur d'exploration, il est utile de faire plusieurs tirs par ligne de l'image, au prix d'une diminution de la cadence d'image. Dans le cas où l'on veut en plus corriger les fluctuations de vitesse ultrasonore, on peut déterminer des retards différents pour chaque tir : le procédé permet alors soit de faire deux tirs (ou plus) pour chaque focale d'émission, soit d'utiliser les corrections en cascade d'une profondeur à l'autre, puis d'une ligne à l'autre, soit encore d'utiliser pour chaque profondeur les retards déterminés pour la ligne précédente à la même profondeur.

Selon une autre variante du procédé, l'étape de réception et traitement comprend, préalablement à la correction des retards de focalisation, une opération de détection de zone anéchogène dans le milieu exploré et/ou de détection de composante linéaire dans les retards de focalisation. En effet, dans toutes les techniques d'examen aux ultrasons, les aberrations sont corrigées à partir des signaux issus d'un milieu considéré comme relativement uniforme, c'est-à-dire sans cible nettement plus brillante que le reste du milieu exploré ou, au contraire, sans zone anéchogène. Or, de fait, les tissus explorés peuvent parfois être fortement non uniformes, et la détection de ces irrégularités est très utile. Lorsqu'une cible brillante, située hors de l'axe de la ligne explorée, renvoie des échos qui interfèrent avec les signaux que l'on veut corréler, le calcul des retards de correction en est faussé, mais la présence d'une composante linéaire sur ces retards permet de détecter cette situation. La détection d'une zone anéchogène, elle, est possible par exemple en comparant l'amplitude des signaux reçus à la moyenne sur l'image et en ne modifiant pas les retards de correction dans ce cas.

Le but de l'invention est également de proposer un appareil pour la mise en oeuvre du procédé qui vient d'être décrit.

L'invention concerne à cet effet un appareil tel que défini dans le préambule de la description et caractérisé en ce que ledit étage de commande comprend des moyens de déplacement de ladite ouverture d'un nombre p d'éléments transducteurs égal à 1 ou faible devant le nombre n, chaque correction des retards de focalisation à l'émission n'étant appliquée qu'après ledit décalage et sur seulement les (n-p) éléments transducteurs communs à deux ouvertures successives. Lorsque n = m, ledit étage de commande comprend des moyens de déplacement de l'ouverture par modification de la loi de retards appliquée aux éléments transducteurs.

Enfin, selon l'invention, ledit appareil peut aussi comprendre des moyens d'interruption de correction en fonction d'un critère prédéterminé, à savoir le dépassement d'un seuil, correspondant par exemple à un nombre de tirs prédéterminé, ou bien à une valeur prédéterminée de l'énergie de la ligne échographique.

Les particularités et avantages de l'invention apparaitront maintenant de façon plus précise dans la description qui va suivre, ainsi que dans les dessins annexés donnés à titre d'exemples non limitatifs et dans lesquels :
- les figures 1a à 1d présentent différents types de structures de sonde ultrasonore utilisables en échographie ultrasonore ;
- les figures 2a et 2c montrent deux exemples de réalisation d'un échographe classique, la figure 2b montrant pour ces deux exemples une réalisation du sous-ensemble de traitement et de visualisation qui les équipe ;
- la figure 3 montre un exemple de réalisation d'un échographe selon l'invention ;
- les figures 4a et 4b montrent un exemple de réalisation respectivement de l'étage de corrélation de l'échographe de la figure 3, et, dans cet étage, de l'un des corrélateurs prévus ;
- la figure 5 montre, par rapport à la figure 3, une variante de réalisation des voies de réception et traitement.

De façon classique, un examen de milieux par échographie ultrasonore comprend une étape d'émission par tirs périodiques effectués à partir d'un réseau de m éléments transducteurs dont n sont sélectionnés pour constituer l'ouverture ultrasonore (n est en général inférieur à m). Cette étape d'émission de n signaux ultrasonores vers le milieu à explorer est suivie d'une étape de réception et traitement des signaux échographiques renvoyés vers lesdits n transducteurs par les obstacles rencontrés dans ce milieu. A l'émission comme à la réception est prévue une opération de focalisation par application d'une loi de retards appropriée respectivement dans les n voies d'émission et dans les n voies de réception associées aux n éléments transducteurs constituant l'ouverture ultrasonore.

Cette étape de réception et traitement comprend également elle-même :
(a) une étape de corrélation : cette étape consiste, à la réception des signaux focalisés en provenance des transducteurs, à comparer deux à deux à l'aide de corrélateurs les signaux ainsi reçus, celui des retards entre ces signaux qui correspond au maximum de corrélation observé constituant la valeur de correction de retard à appliquer ;
(b) une étape de correction : pour les n signaux focalisés correspondant à l'ouverture, (n-1) valeurs de correction de retard sont ainsi déterminées, en fonction desquelles peuvent être corrigés les retards de focalisation, lors du tir suivant ou du même tir.

Selon l'invention, l'étape de réception et traitement comprend également, à la suite de l'étape (a), une étape de correction à la réception au cours du même tir, cette correction des retards de focalisation étant effectuée toujours à partir des (n-1) valeurs de correction déterminées.

Le procédé selon l'invention consiste à prévoir, avant l'étape de correction des retards de focalisation à l'émission, une opération de déplacement de l'ouverture. Lorsque ce déplacement est réalisé par décalage d'un nombre p d'éléments transducteurs égal à 1 ou faible devant le nombre n (ne dépassant pas par exemple 1/10^{ième} de cette valeur), ladite correction n'est appliquée qu'aux (n-p) éléments transducteurs communs à deux ouvertures successives. Lorsque le nombre n est égal à m, l'ouverture peut être déplacée par modification de la loi de retards appliquée aux m éléments transducteurs, et la correction est appliquée à ces m éléments.

Dans une variante du procédé, l'étape de réception et traitement, dans laquelle, comme on vient de l'indiquer, on a donc prévu une correction itérative soit à l'émission, soit à l'émission et à la réception, peut également inclure, selon l'invention, une temporisation, dans le but d'interrompre le processus de correction itérative dès qu'on estime, selon un critère prédéterminé, que cette correction est efficace et suffisante. Le critère d'interruption est par exemple le contrôle de l'exécution d'un nombre de tirs prédéterminé, ou bien repose sur un calcul d'énergie de la ligne échographique.

Une autre variante consiste encore à prévoir, avant la correction des retards de focalisation, une étape de détection de zone anéchogène dans le milieu exploré et/ou de détection de composante linéaire dans les retards de focalisation.

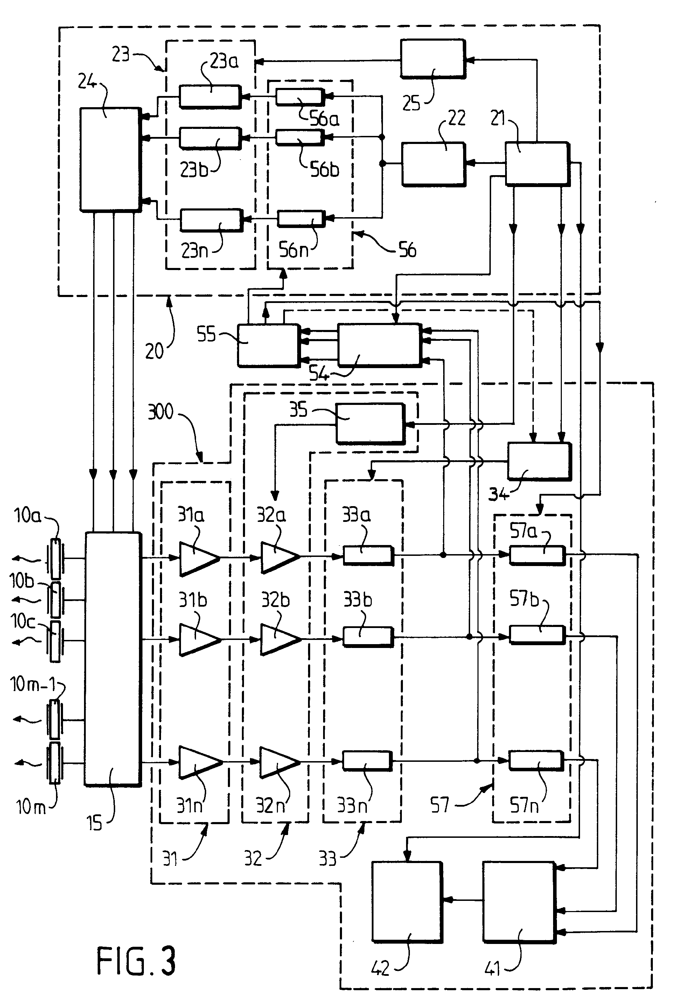

Pour la mise en oeuvre du procédé selon l'invention, un exemple de réalisation d'échographe ultrasonore est représenté sur la figure 3. Cet appareil comprend tout d'abord, comme précédemment, un réseau de m transducteurs ultrasonores 10a à 10m constituant l'ouverture ultrasonore et destinés à émettre et à recevoir des signaux ultrasonores, ainsi qu'un aiguilleur analogique 15. Ce réseau de transducteurs est ici linéaire, mais il ne s'agit là que d'un exemple de réalisation non limitatif. Le réseau de transducteurs peut être bidimensionnel, ou bien être du type décrit par exemple dans le brevet français n° 2592720, sans que ces autres exemples soient eux-mêmes limitatifs.

L'émission ultrasonore est effectuée par tirs périodiques vers le milieu à explorer (non représenté), les signaux émis ayant été préalablement focalisés, électroniquement, en excitant les transducteurs selon une loi temporelle déterminée imposant à chacun d'eux un retard distinct. Cette émission est réalisée à l'aide de l'étage d'émission 20 comprenant, comme on l'a vu, les éléments suivants :
(a) le circuit séquenceur 21 définissant la cadence des tirs ultrasonores ;
(b) le circuit 22 d'émission des signaux électriques d'excitation des transducteurs ;
(c) si la focalisation n'a pas été réalisée par le circuit 22, le circuit de focalisation électronique 23 ;
(d) le circuit 24 d'activation de la haute tension, pour l'exécution de l'émission par les transducteurs.
(e) le circuit 25 de contrôle de focalisation à l'émission.

La réception des signaux échographiques renvoyés vers les transducteurs par les obstacles rencontrés dans le milieu exploré est assurée par un étage 300 de réception et traitement, composé de n voies de réception et traitement comprenant elles-mêmes, dans le cas présent, les éléments suivants :
(a) l'ensemble des n préamplificateurs 31a à 31n constituant le circuit de préamplification 31 ;
(b) le circuit de compensation de gain en fonction du temps 32 ;
(c) l'ensemble des lignes à retard 33a à 33n constituant le circuit 33 de focalisation à la réception, commandé par le séquenceur 34.

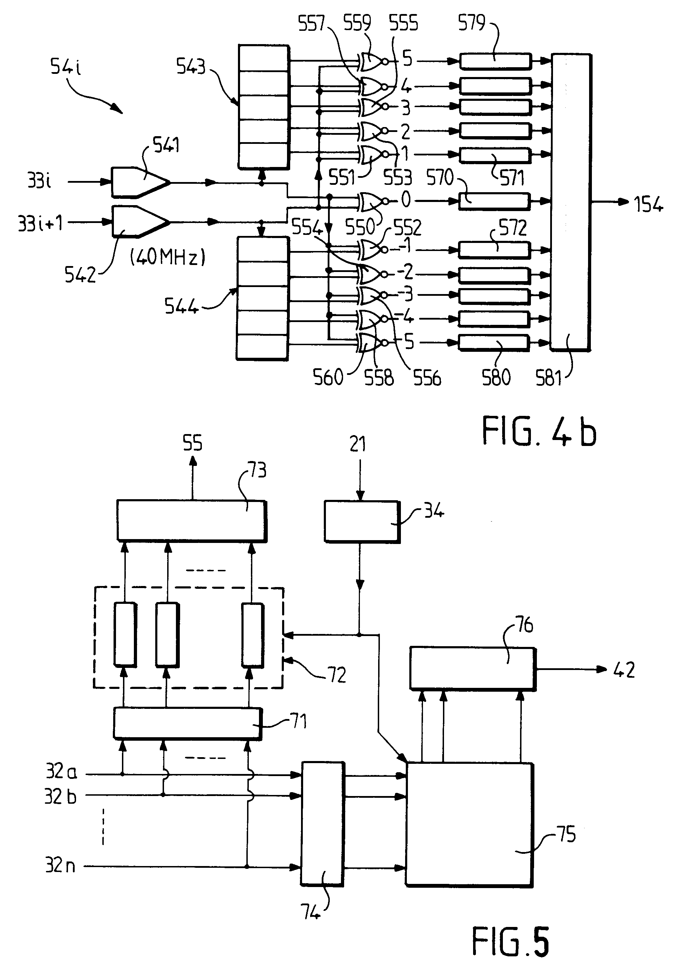

Le sommateur 41 reçoit les sorties des n voies de réception et traitement ainsi constituées, et est suivi du sous-ensemble de traitement et de visualisation 42. En parallèle sur les n voies de réception et traitement, un étage de corrélation 54 reçoit du circuit séquenceur 21 un signal qui définit une fenêtre temporelle de mesure. Cet étage 54, représenté plus en détail sur la figure 4a, comprend ici n-1 corrélateurs (ici des corrélateurs 1 bit) à deux entrées, référencés 54a à 54n-1 et décrits eux-mêmes plus en détail sur la figure 4b montrant l'un d'entre eux, par exemple le corrélateur 54i.

On précisera ici que des corrélateurs en circuit intégré sont actuellement disponibles sur le marché des composants, par exemple le corrélateur TDC 1023 de la société TRW, La Jolla, CA 92038, Etats-Unis d'Amérique. Dans le cas présent, et comme indiqué sur la figure 4b, le corrélateur 54i, comme chacun des n-2 autres corrélateurs, comprend tout d'abord deux convertisseurs analogiques-numériques 1bit 541 et 542, dont l'un reçoit la sortie de la i-ième ligne à retard 33i et l'autre la sortie de la (i+1)ième ligne à retard 33i+1. Ces convertisseurs 541 et 542, commandés par une fréquence d'horloge de valeur égale à environ 8 à 10 fois celle de la fréquence centrale du réseau de transducteurs (par exemple une fréquence d'horloge de 40 mégahertz), sont suivis de registres à décalage 543 et 544, le registre 543 étant en série en sortie du convertisseur 541 et le registre 542 en série en sortie du convertisseur 542. L'entrée de chaque registre et les sorties de ces registres sont envoyées deux à deux sur les deux entrées de circuits NON-OU exclusif, ici au nombre de 11 et référencés 550 à 560, de façon à pouvoir effectuer les onze comparaisons suivantes :
- dans le circuit 550, comparaison des sorties i et i+1, non retardées ;
- dans les circuits 551, 553, 555, 557 et 559, comparaison de la sortie i+1 et de la sortie i successivement retardée d'une à cinq périodes de décalage du registre 543 ;
- dans les circuits 552, 554, 556, 558 et 560, comparaison de la sortie i et de la sortie i+1 successivement retardée d'une à cinq périodes de décalage du registre 544.

Onze compteurs 570 à 580 du nombre de 1, présents de façon respectivement correspondante en sortie des circuits NON-OU exclusif 550 à 560, et suivis d'un circuit 581 de sélection du plus grand des signaux de sortie de ces compteurs, permettent finalement l'estimation du retard correspondant à la corrélation maximale entre les deux signaux échographiques concernés. Le nombre de décalages des registres (ici 5) et, en conséquence, le nombre de compteurs (ici 11) dépendent de la fréquence d'horloge et de la fréquence centrale du réseau de transducteurs. Lorsque ces fréquences sont dans un rapport de 8 à 10, cinq décalages sont, en effet, nécessaires et suffisants. Si ce rapport est par exemple plus grand, il en faut plus, afin de conserver une précision de l'ordre d'un huitième de longueur d'onde sur les retards de correction.

Chaque corrélateur permet ainsi d'estimer le retard entre deux signaux échographiques focalisés de façon dynamique dès le premier tir, la focalisation étant effectuée comme s'il n'existait pas d'inhomogénéités dans le milieu exploré. L'ensemble de ces (n-1) valeurs de retards délivrées par les (n-1) circuits de sélection des corrélateurs est alors traité, comme indiqué sur la figure 4a, dans un circuit de recalage 154, qui procède au recalage de ces valeurs par rapport à une référence commune (par exemple par rapport à la première voie, mais ce pourrait être par rapport à l'une quelconque d'entre elles). Le circuit de recalage 154 est suivi ici d'un circuit 155 de régression linéaire sur les (n-1) valeurs recalées, afin d'en supprimer la tendance linéaire (dues à l'éventuelle présence de cibles situées hors de l'axe de focalisation). L'ordre dans lequel sont effectués ce recalage et cette suppression de tendance linéaire n'est donné ici qu'à titre d'exemple et peut être modifié. On signalera aussi, en matière de structure des circuits, que, si les registres à décalage sont extraits des corrélateurs, on peut, tout en conservant le même principe de fonctionnement, prévoir un nombre deux fois plus faible de ces registres.

Dans l'exemple de réalisation ici décrit, ce sont en tout cas les (n-1) sorties du circuit 155 qui constituent les sorties de l'étage de corrélation 54. Pour les n voies de réception et traitement considérées, on dispose donc de (n-1) retards, qui sont, de préférence, mesurés entre des signaux reçus sur des transducteurs adjacents, afin d'obtenir la meilleure précision. Les retards dûs aux inhomogénéités à corriger sont relativement faibles, en général, et l'on peut donc n'effectuer les corrélations que pour des décalages de l'ordre de plus ou moins une demi-longueur d'onde seulement, ce qui justifie de n'utiliser ici, dans les corrélateurs, que des registres à décalage de cinq cellules seulement, compte tenu des valeurs de la fréquence d'horloge et de la fréquence centrale du réseau de transducteurs.

Les retards ainsi estimés sont stockés dans un circuit de mémorisation 55 puis introduits avant déclenchement du tir suivant dans les voies d'émission à l'aide de lignes à retard 56a à 56n constituant un circuit 56 de correction à l'émission. Ce circuit 56 est par exemple placé juste en amont du circuit de focalisation électronique 23. Une nouvelle émission peut alors être effectuée, qui tient compte, dans la focalisation à l'émission, des corrections ainsi effectuées sur les retards propres à chaque voie d'émission. A la réception des signaux échographiques correspondant à ce nouveau tir, les retards entre ces signaux sont à nouveau estimés par corrélation, comme précédemment, puis réintroduits juste avant le tir suivant dans chaque voie d'émission, et ainsi de suite. On réalise donc, par ces corrélations successives, une correction itérative des inhomogénéités de vitesse ultrasonore dans les milieux explorés.

On remarquera ici que les retards estimés et stockés dans le circuit de mémorisation 55 peuvent être réintroduits non seulement dans les voies d'émission lors du tir suivant, mais également, au cours de ce tir suivant, dans les voies de réception et traitement. Cette variante est illustrée sur la figure 3, qui montre, en trait interrompu, une connexion supplémentaire entre le circuit 55 et le séquenceur 34, ce dernier modifiant alors, en fonction des retards mémorisés, pour chaque voie, le retard permettant la focalisation dynamique à la réception.

La modification des retards de focaliation dynamique à la réception peut être effectuée, comme décrit ici, directement dans le circuit de focalisation 33, programmable, qui est, on le rappelle, contrôlé par le séquenceur 34 (celui-ci contient en mémoire l'ensemble des lois de retard pour chaque zone de focalisation et pour chaque ligne de l'image). Cette modification peut aussi, bien entendu, être effectuée selon un autre mode (non représenté), en prévoyant par exemple, juste en amont ou juste en aval du circuit 33, un circuit auxiliaire dit de correction de focalisation, lui aussi programmable et lui aussi composé de n lignes à retard correspondant aux n voies de réception et de traitement. S'il est prévu, ce circuit de correction de focalisation, commandé par le circuit de mémorisation 55, est placé en amont du circuit 33, il reçoit les sorties du circuit 32, et ce sont comme précédemment les sorties du circuit 33 qui constituent les sorties des n voies de réception et traitement, fournies au sommateur 41. Il peut aussi, alternativement, être placé en aval du circuit 33 : il en reçoit alors les sorties, et ses n sorties constituent lesdites sorties, fournies au sommateur 41, des n voies de réception et traitement.

Selon l'invention, les retards estimés et stockés dans le circuit de mémorisation 55 sont, on l'a vu, réintroduits dans les voies de réception et traitement non pas lors du tir suivant, mais immédiatement, tant que le tir en cours n'est pas achevé. L'étage de réception et traitement 300 comprend à cet effet un circuit 57 de correction à la réception, constitué de lignes à retards 57a à 57n prévues en série dans chacune des voies de réception et traitement respectivement, une connexion supplémentaire étant prévue entre le circuit 55 et ce circuit 57.

Selon une variante de réalisation, il est tout à fait possible d'interrompre ce processus de correction itérative lorsqu'on estime que ladite correction est efficace et suffisante. Cette interruption peut survenir par exemple soit après un nombre de tirs prédéterminé, soit à l'aide d'un critère d'interruption. On peut, par exemple, réaliser l'interruption lorsque l'énergie de la ligne échographique atteint un seuil prédéfini. On peut considérer en effet que cette énergie est maximale lorsque la focalisation est correcte à l'émission et à la réception. Un circuit de commande d'interruption, non représenté ici mais mis en place par exemple en amont de l'étage de corrélation 54, est alors prévu pour mettre en oeuvre cette variante et comprend d'une part un circuit de calcul de l'énergie de la ligne échographique, dont l'entrée est à cet effet reliée à la sortie du sommateur 41, et d'autre part, afin de disposer d'une valeur normalisée de cette énergie, un circuit de calcul des énergies des signaux individuels, qui prélève donc, par l'intermédiaire de n connexions, les n signaux présents sur les n entrées de ce sommateur. Si Sᵢ(t) est l'énergie du i-ième signal individuel présente sur la i-ième entrée du sommateur 41, l'énergie normalisée C de la ligne échographique est en effet égale au rapport de l'énergie de la ligne sur n fois la somme des énergies Sₐ(t) à Sₙ(t) des signaux individuels (et bien entendu comprise entre 0 et 1). En fait, dans le cas où l'on explore un milieu diffuseur, la valeur de C dépend de la focalisation et s'avère être, dans le cas des essais qui ont été réalisés, égale au maximum à 2/3 si la matrice de transducteurs est linéaire, et de l'ordre de 0,45 si celle-ci est circulaire. L'interruption du processus itératif est commandée lorsque la valeur C atteint un seuil prédéterminé. Un diviseur et un comparateur, eux aussi non représentés, effectuent en sortie des deux circuits de calcul lesdites opérations de calcul du rapport et de comparaison au seuil.

Bien entendu, la présente invention n'est pas limitée aux exemples de réalisation décrits, à partir desquels d'autres variantes peuvent être proposées sans pour cela sortir du cadre de l'invention. Par exemple, il faut bien considérer que la correction itérative selon l'invention, par rebouclages successifs d'information de l'étage de réception et traitement soit vers l'étage d'émission, soit vers l'étage de réception et traitement lui-même, est obtenue aussi bien lorsque les voies d'émission et/ou de réception sont numériques que lorsqu'elles sont analogiques. En effet, les voies de réception et traitement sont analogiques sur la figure 3, mais peuvent aussi, comme on l'a mentionné, être numériques, un convertisseur analogique-numérique étant alors inséré dans chacune de ces voies, en série, par exemple en sortie du circuit de compensation de gain en fonction du temps 32. Cette variante n'est pas représentée, sa réalisation étant facilement déduite de la figure 3. On a par contre représenté, sur la figure 5 à considérer par rapport à la figure 3, une autre variante de réalisation des voies de réception et traitement. En effet, s'il n'est pas indispensable d'accéder distinctement à chacun des n signaux retardés, d'autres architectures que celles décrites jusqu'à présent sont possibles. Comme le montre notamment cette figure 5, une partie de ces voies est maintenant numérique et comprend successivement un circuit 71 de conversion analogique-numérique, un circuit 72 de focalisation à la réception (ces circuits 71 et 72 sont ici sur 1 bit, le circuit 71 convertissant le signal qu'il délivre, par exemple sur 8 bits, en un signal sur 1 bit, en ne conservant que le bit de signe), et un circuit de corrélation 73 réalisant comme précédemment la détermination des retards à mémoriser et à utiliser pour la correction, tandis que la suite des voies de réception et traitement reste analogique, avec successivement un convertisseur tension-courant 74, un circuit d'établissement de connexions commandable 75 (dit circuit "cross-switch", en anglais), et un circuit d'addition 76 consistant en une ligne analogique qui additionne directement les courants reçus. Le séquenceur 34 commande d'une part le circuit de focalisation 72, et d'autre part le circuit 75 d'établissement de connexions commandable. La sortie du circuit 76 est reliée à l'entrée du sous-ensemble 42.

## Revendications

1. Procédé d'examen de milieux par échographie ultrasonore comprenant une étape d'émission, à partir d'un réseau de m éléments transducteurs ultrasonores, de signaux ultrasonores vers le milieu à explorer et une étape de réception et traitement des signaux échographiques renvoyés par le milieu examiné vers lesdits éléments transducteurs, avec focalisation desdits signaux par application d'une loi de retards appropriée respectivement dans les n voies d'émission et dans les n voies de réception associées aux n éléments transducteurs constituant l'ouverture ultrasonore, cette étape de réception et traitement comprenant elle-même :
(a) une étape de corrélation, deux à deux, des n signaux disponibles après focalisation à la réception, en vue de la détermination de (n-1) valeurs de correction des retards de focalisation ;
(b) en fonction des (n-1) valeurs ainsi déterminées, une étape de correction des retards de focalisation lors du tir suivant ou du même tir ;
caractérisé en ce que l'étape de réception et traitement comprend, préalablement à ladite correction des retards de focalisation à l'émission, une opération de déplacement de l'ouverture d'un nombre p d'éléments transducteurs égal à 1 ou faible devant le nombre n, et en ce que ladite correction à l'émission n'est appliquée qu'aux (n-p) éléments transducteurs communs à deux ouvertures successives.

2. Procédé selon la revendication 1, caractérisé en ce que, lorsque n = m, chaque opération de déplacement de l'ouverture est obtenue par modification de la loi de retards appliquée aux éléments transducteurs.

3. Procédé selon l'une des revendications 1 et 2, caractérisé en ce que l'étape de réception et traitement comprend également une opération de temporisation, pour l'interruption des corrections après un nombre de tirs prédéterminé.

4. Procédé selon l'une des revendications 1 et 2, caractérisé en ce que l'étape de réception et traitement comprend également une opération de temporisation, pour l'interruption des corrections lorsque l'énergie de la ligne échographique atteint un seuil prédéterminé.

5. Procédé selon l'une des revendications 1 à 4, caractérisé en ce que l'étape de réception et traitement comprend, préalablement à la correction des retards de focalisation, une opération de détection de zone anéchogène dans le milieu exploré et/ou de détection de composante linéaire dans les retards de focalisation.

6. Appareil d'examen de milieux par échographie ultrasonore, comprenant un réseau de m éléments transducteurs ultrasonores associé à un étage d'émission de signaux ultrasonores vers le milieu à explorer, à un étage de réception et traitement des signaux échographiques renvoyés par le milieu exploré vers lesdits éléments transducteurs, lesdits étages d'émission et de réception et traitement comprenant respectivement des moyens de focalisation par application de retards appropriés dans les n voies d'émission et dans les n voies de réception associées aux n éléments transducteurs constituant l'ouverture ultrasonore, et à un étage de commande de balayage pour le déplacement de l'ouverture ultrasonore sur le réseau d'éléments transducteurs, l'étage de réception et traitement comprenant en outre :
(a) en parallèle sur les n voies de réception, des moyens de corrélation des n signaux focalisés associés à ces n voies et considérés deux à deux, en vue de la détermination de (n-1) valeurs de correction des retards de focalisation ;
(b) des moyens de correction, en fonction des (n-1) valeurs ainsi déterminées, des retards de focalisation, lors du tir suivant ou du même tir ;
caractérisé en ce que ledit étage de commande comprend des moyens de déplacement de ladite ouverture d'un nombre p d'éléments transducteurs égal à 1 ou faible devant le nombre n, chaque correction des retards de focalisation à l'émission n'étant appliquée qu'après ledit décalage et sur seulement les (n-p) éléments transducteurs communs à deux ouvertures successives.

7. Appareil selon la revendication 6, caractérisé en ce que, lorsque n = m, ledit étage de commande comprend des moyens de déplacement de ladite ouverture par modification de la loi de retards appliquée aux éléments transducteurs.

8. Appareil selon l'une des revendications 6 et 7, caractérisé en ce qu'il comprend des moyens de temporisation, pour l'interruption des corrections après dépassement d'un seuil correspondant à un nombre de tirs prédéterminé.

9. Appareil selon l'une des revendications 6 et 7, caractérisé en ce qu'il comprend des moyens de temporisation, pour l'interruption des corrections après dépassement d'un seuil correspondant à une valeur prédéterminée de l'énergie de la ligne échographique.

## Patentansprüche

1. Verfahren zur Umgebungsuntersuchung mittels Ultraschall-Echographie, das einen Schritt zur Aussendung von Ultraschallsignalen in Richtung der zu untersuchenden Umgebung von einem Array aus m Ultraschallwandlerelementen aus umfaßt sowie einem Schritt zum Empfang und zur Verarbeitung der von der untersuchten Umgebung in Richtung der genannten Wandlerelemente zurückgesendeten Echographiesignale, mit Fokussierung der genannten Signale durch Anwendung einer geeigneten Verzögerungsverteilung in den n Sendekanälen beziehungsweise den n Empfangskanälen, die zu den die Ultraschallapertur bildenden n Wandlerelementen gehören, wobei der Empfangs- und Verarbeitungsschritt selbst folgendes umfaßt:
(a) einen Schritt zur paarweisen Korrelation der n nach Fokussierung beim Empfang verfügbaren Signale zur Bestimmung der (n-1) Korrekturwerte für die Fokussierungsverzögerung;
(b) einen Schritt zur Korrektur der Fokussierungverzögerungen bei dem folgenden Puls oder demselben Puls in Abhängigkeit von den (n-1) so erhaltenen Werten;
dadurch gekennzeichnet, daß der Empfangs- und Verarbeitungsschritt vor der genannten Korrektur der Fokussierungsverzögerungen beim Senden eine Operation zur Verschiebung der Apertur um eine Anzahl von p Wandlerelementen, die gleich 1 oder im Vergleich zur Anzahl n klein ist, umfaßt und daß die genannte Korrektur beim Senden nur bei den (n-p) Wandlerelementen durchgeführt wird, die zwei aufeinanderfolgende Aperturen gemeinsam haben.

2. Verfahren nach Anspruch 1, dadurch gekennzeichnet, daß, wenn n = m, jede Operation zur Verschiebung der Apertur durch Veränderung der auf die Wandlerelemente angewendeten Verzögerungsverteilung erhalten wird.

3. Verfahren nach einem der Ansprüche 1 und 2, dadurch gekennzeichnet, daß der Empfangs- und Verarbeitungsschritt auch eine Operation zur Zeitsteuerung umfaßt, um die Korrekturen nach einer vorbestimmten Anzahl Pulse zu unterbrechen.

4. Verfahren nach einem der Ansprüche 1 und 2, dadurch gekennzeichnet, daß der Empfangs- und Verarbeitungsschritt auch eine Operation zur Zeitsteuerung umfaßt, um die Korrekturen zu unterbrechen, wenn die Energie der echographischen Linie eine vorbestimmte Schwelle erreicht.

5. Verfahren nach einem der Ansprüche 1 bis 4, dadurch gekennzeichnet, daß der Empfangs- und Verzögerungsschritt vor der Korrektur der Fokussierungsverzögerungen eine Operation zur Dektektion einer echofreien Zone in der untersuchten Umgebung und/oder zur Detektion einer linearen Komponente in den Fokussierungsverzögerungen umfaßt.

6. Vorrichtung zur Umgebungsuntersuchung mittels Ultraschall-Echographie, mit einem Array aus m Ultraschallwandlerelementen, das zu einer Stufe zur Aussendung von Ultraschallsignalen in Richtung der zu untersuchenden Umgebung gehört, zu einer Stufe zum Empfang und zur Verarbeitung der von der untersuchten Umgebung in Richtung der genannten Wandlerelemente zurückgesendeten Echographiesignale, wobei die genannte Sendestufe und die Empfangs- und Verarbeitungsstufen jeweils Mittel zur Fokussierung durch Herbeiführung geeigneteter Verzögerungen in den n Sendekanälen beziehungsweise den n Empfangskanälen, die zu den die Ultraschallapertur bildenden n Wandlerelementen gehören, umfaßt, und zu einer Abtaststeuerungsstufe für die Verschiebung der Ultraschallapertur über dem Array aus Wandlerelementen, wobei die Empfangs- und Verarbeitungsstufe außerdem folgendes umfaßt:
(a) zu den n Empfangskanälen parallele Mittel zur paarweisen Korrelation der n zu diesen n Kanälen gehörenden fokussierten Signale zur Bestimmung von (n-1) Korrekturwerten für die Fokussierungsverzögerungen;
(b) Mittel zur Korrektur der Fokussierungsverzögerungen bei dem folgenden Puls oder demselben Puls in Abhängigkeit von den so bestimmten (n-1) Werten ;
dadurch gekennzeichnet, daß die genannte Steuerstufe Mittel zur Verschiebung der genannten Apertur um eine Anzahl von p Wandlerelementen, die gleich 1 oder im Vergleich zur Anzahl n klein ist, umfaßt, wobei die Korrektur der Fokussierungsverzögerungen beim Senden erst nach der genannten Verschiebung und nur auf die (n-p) Wandlerelement angewendet wird, die zwei aufeinanderfolgenden Aperturen gemeinsam sind.

7. Vorrichtung nach Anspruch 6, dadurch gekennzeichnet, daß, wenn n = m, die genannte Steuerstufe Mittel zur Verschiebung der genannten Apertur durch Veränderung der auf die Wandler angewendeten Verzögerungsverteilung umfaßt.

8. Vorrichtung nach einem der Ansprüche 6 und 7, dadurch gekennzeichnet, daß sie Zeitsteuerungsmittel umfaßt, um die Korrekturen zu unterbrechen, nachdem eine einer vorbestimmten Anzahl Pulse entsprechende Schwelle überschritten worden ist.

9. Vorrichtung nach einem der Ansprüche 6 und 7, dadurch gekennzeichnet, daß sie Zeitsteuerungsmittel umfaßt, um die Korrekturen zu unterbrechen, nachdem eine einem vorbestimmten Wert der echographischen Linie entsprechende Schwelle überschritten worden ist.

## Claims

1. A method of examining media by ultrasonic echography, comprising a step for transmitting ultrasonic signals from an array of m ultrasonic transducer elements to the medium to be examined, and a step for receiving and processing the echographic signals returned to said transducer elements by the medium being examined, including focusing of said signals by application of an appropriate delay rule in the n transmission channels and the n receiving channels associated with the n transducer elements constituting the ultrasonic aperture, which receiving and processing step itself including:
(a) a step for the two-by-two correlation of the n signals available after focusing in the receiving mode in order to determine (n-1) focusing delay correction values;
(b) a step for correcting, as a function of the (n-1) values thus determined, focusing delays during the next activation or the same activation,
characterized in that the receiving and processing step also includes, prior to the correction of the focusing delays in the transmission mode an operation for the displacement of the aperture by a number of p transducer elements which is equal to 1 or small with respect to the number n, said correction in the transmission mode being applied only to the (n-p) transducer elements common to two successive apertures.

2. A method as claimed in Claim 1, characterized in that, when n = m, each aperture shift is realised by modification of the delay rule applied to the transducer elements.

3. A method as claimed in one of the Claims 1 and 2, characterized in that the receiving and processing step also includes a timing operation for interrupting corrections after to a predetermined number of activations.

4. A method as claimed in one of the Claims 1 and 2, characterized in that the receiving and processing step also includes a timing operation for interrupting the corrections when the energy of the echographic line reaches a predetermined threshold.

5. A method as claimed in one of the Claims 1 to 4, characterized in that the receiving and processing step includes, prior to the correction of the focusing delays, an operation for detection of an anechoic zone in the medium scanned and/or the detection of a linear component in the focusing delays.

6. An apparatus for examining media by ultrasonic echography, comprising an array of m ultrasonic transducer elements associated with a stage for the transmission of ultrasonic signals to the medium to be examined and with a stage for receiving and processing echographic signals returned to said transducer elements by the object being examined, said transmission stage and said receiving and processing stage comprising respective means for focusing by application of appropriate delays in the n transmission channels and the n receiving channels associated with the n transducer elements constituting the ultrasonic aperture, and with a scan control stage for shifting the ultrasonic aperture across the array of transducer elements, the receiving and processing stage also comprising:
(a) means for two-by-two correlation of the n focused signals associated with said n channels in order to determine (n-1) focusing delay correction values, which means are connected parallel to the n receiving channels;
(b) means for correcting, as a function of the (n-1) values thus determined, focusing delays during the next activation or the same activation, characterized in that said control stage comprises means for shifting said aperture by a number of p transducer elements which is equal to 1 or small with respect to the number n, each focusing delay correction in the transmission mode being applied only after said shift and only to the (n-p) transducer elements common to two successive apertures.

7. An apparatus as claimed in Claim 6, characterized in that, when n = m, said control stage comprises means for displacing said aperture modification of the delay rule applied to the transducer elements.

8. An apparatus as claimed in one of the Claims 6 an 7, characterized in that it comprises timing means for interrupting the corrections after the crossing of a threshold corresponding to a predetermined number of activations.

9. An apparatus as claimed in one of the Claims 6 and 7, characterized in that it comprises timing means for interrupting the corrections after the crossing a threshold corresponding to a predetermined value of the energy of the echographic line.
